# EUROPEAN PATENT APPLICATION

(11) **EP 4 782 955 A1**
(43) Date of publication of application: **29.07.2026**
(21) Application number: 25154099.3
(22) Date of filing: 27.01.2025
(51) Int. Cl.: G05G 1/46, G05G 5/05, B60T 7/06, G05G 1/44

(54) **PEDAL UNIT FOR A VEHICLE, IN PARTICULAR UTILITY VEHICLE, HOUSING, AND VEHICLE**

(71) Applicant: ZF CV Systems Europe BV, 1170 Brüssel (BE)
(72) Inventor: LESZCZUK, Agnieszka, 54-061 WROCLAW (PL); TRELA, Marcin, 57-100 STRZELIN (PL)
(74) Representative: Rabe, Dirk-Heinrich

(57) **Abstract**

Pedal unit (100) for a vehicle (200a), in particular utility vehicle (200b); wherein the pedal unit (100) comprises a housing (110) with a pivot section (115) and a through hole (120); the pedal unit (100) comprises a pedal (140) rotatably pivoted at the pivot section (115), and the pedal (140) is adapted to be actuated; the pedal unit (100) comprises a push rod (145); the push rod (145) is mechanically coupled to the pedal (140) and is adapted to be deflected by an actuation of the pedal (140); and the push rod (145) is adapted to project into and/or through the through hole (120); and the pedal unit (100) comprises a spring seat (150) circumferentially arranged around the through hole (120) and being adapted to support a compression spring (160) for restoring the pedal (140) against an actuation of the pedal (140).

## Description

The invention relates to a pedal unit for a vehicle, in particular utility vehicle. Furthermore, the invention relates to a housing for a pedal unit for a vehicle, in particular utility vehicle, and to a vehicle, in particular utility vehicle.

Pedal units are known in the prior art. Such pedal units are adapted to transform a mechanical actuation, in particular provided by a foot of a human operator, i.e., of a driver, into an actuation translation, in particular on a hydraulic or a pneumatic piston, for building up a pressure on a fluidic medium and in turn actuate a hydraulic or a pneumatic system. To achieve this, the pedal unit typically comprises pedal, also called lever, which is adapted to transform the mechanical actuation into a lever rotation, wherein the lever rotation is transformed into the actuation translation by a push rod connected to the pedal.

Therein, the pedal unit typically comprises a pivot section for rotatably mounting the pedal. The pedal unit particularly makes use of a leverage effect when transforming the mechanical actuation into the actuation translation. The lever rotation - in particular when moving in a retracting direction after the release of a mechanical actuation signal - is typically achieved by an extension spring.

EP 3 989 036 A1 relates to an actuation pedal comprising a pedal lever rotatable in a housing; a stop bar, which is detachably fixed to the housing and arranged to limit the lever rotation of the pedal lever, the stop bar comprising a stop feature adapted to interfere with a lever hook fixed to the pedal lever, defining an end stop of the lever rotation; a push rod, arranged to contact the pedal lever on a pedal end and a piston on an opposing piston end, wherein the push rod is adapted to transform the lever rotation into an actuation translation for a piston, wherein the piston is adapted to build up a pressure on a medium upon receiving the actuation translation. The actuation pedal further comprises a retracting spring. The retracting spring is adapted to exert a retracting force to rotate back the pedal lever in a retracting direction into its initial position after the mechanical actuation signal has been released from the actuation section.

However, using an extension spring for a pedal unit may lead to an improvable construction, in particular with respect to construction space and/or the implementation of various characteristics of a retracting force as a function of pedal actuation.

In the light of the prior art, the problem of the disclosure is to provide a technological contribution to the art, and to provide a pedal unit being suitable for improving at least one of the above-mentioned aspects of the prior art, respectively. In particular, it is an object of the disclosure to provide a pedal unit which provides an improved usage of construction space and/or enables more versatile retraction characteristics.

The object is solved by the features of the independent claim. The dependent claims have further embodiments of the disclosure as their subject matter.

According to an aspect of the invention, a pedal unit for a vehicle, in particular utility vehicle is provided; wherein the pedal unit comprises a housing with a pivot section and a through hole; the pedal unit comprises a pedal rotatably pivoted at the pivot section, and the pedal is adapted to be actuated; the pedal unit comprises a push rod; the push rod is mechanically coupled to the pedal and is adapted to be deflected by an actuation of the pedal; and the push rod is adapted to project into and/or through the through hole; and the pedal unit comprises a spring seat circumferentially arranged around the through hole and being adapted to support a compression spring for restoring the pedal against an actuation of the pedal.

The disclosure suggests the possibility of an implementation of a compression spring instead of and/or in addition to an extension spring. It is realized that the push rod is typically deflected linearly along its axis under an actuation of the pedal, i.e., under a pedal actuation. Thus, the push rod is typically linearly translated through the through hole. The compression spring is adapted to be compressed under the deflection of the push rod during an actuation of the pedal. Thus, the compression implies a restoring force which acts against the deflection of the push rod and/or the actuation of the pedal. The compression spring is supported at the spring seat and thus in a direct vicinity of the push rod and its typically linear deflection.

Due to the deflection of the push rod and the arrangement of the compression spring in the vicinity of the push rod, a construction space-effective arrangement and a reliable mechanical design of the compression spring is possible. This enables that the pedal unit may be constructed more efficiently with respect to construction space. Further, the arrangement of the compression spring leads to well-defined and typically linear compression of the spring which makes a reliable and efficient mechanical design of the pedal unit with respect to characteristics of a retracting force as a function of pedal actuation possible. This may be utilized to design the pedal unit versatilely with respect to requirements and/or needs of an applicant and/or supplier of the pedal unit.

Optionally, the spring seat is integrally formed with the housing. The spring seat and the housing are thus formed as a single part. This may provide a cost-effective and more efficiently manufacturable pedal unit. Alternatively, the spring seat and the housing may be separate components and are adapted to be mounted together, e.g., by screws and/or rivets.

Optionally, the clutch pedal module comprises a compression spring for restoring the pedal against an actuation of the pedal; and the compression spring is supported at one end on the spring seat and on another end at the push rod. In this embodiment, a restoring force is at least partially provided by the compression spring. Therein, the compression spring is supported on the one hand on the spatially fixed spring seat and on the other hand on the movable push rod. The push rod moves under a pedal actuation relative to the spring seat and causes a compression of the compression spring and thus a restoring force against the pedal actuation. Alternatively, the compression spring may be supported by the pedal instead of by the push rod.

Optionally, the compression spring is a coil spring. A coil spring, also called helical spring, is particularly cost-effective. Further, by a mechanical design of the windings and/or the material of the compression spring, versatile spring characteristics may be efficiently achieved. For example, it is possible to achieve a linear and/or a non-linear dependence between compression and restoring force.

Optionally, each of the housing and the pedal is adapted to provide a mounting section for mounting an extension spring for restoring the pedal against an actuation of the pedal. Therein, the housing may integrally form the mounting section and/or the mounting section may be formed by a component of the pedal unit that is mounted to the housing. An extension spring as an alternative or addition to the compression spring may be mounted to the mounting sections. A pedal actuation may lead to a separation of the mounting sections and thus to an extension of the extension spring and ultimately to a restoring force against the pedal actuation.

Optionally, the pedal unit comprises an extension spring for restoring the pedal against an actuation of the pedal; and the extension spring is supported at the mounting sections. In this embodiment, a restoring force is at least partially provided by the extension spring. Therein, the extension spring is supported on the one hand on the spatially fixed mounting section of the housing on the other hand on the mounting section of the movable pedal. The pedal moves under a pedal actuation relative to the housing and causes an extension of the extension spring and thus a restoring force against the pedal actuation.

Optionally, the spring seat is arranged between the pivot section and the mounting sections. This may achieve a particularly beneficial arrangement with respect to construction space. Alternatively, the mounting sections are arranged between the pivot section and the spring seat.

Optionally, the extension spring is a coil spring. A coil spring, also called helical spring, is particularly cost-effective. Further, by a mechanical design of the windings and/or the material of the extension spring, versatile spring characteristics may be efficiently achieved. For example, it is possible to achieve a linear and/or a non-linear dependence between compression and restoring force.

Optionally, the push rod comprises a second spring seat for supporting the compression spring. This enabled an effective transmission of the restoring force from the compression spring via the push rod to the pedal. The second spring seat may reliably and efficiently with respect to construction space and manufacturability be arranged at the push rod. Alternatively, the second spring seat may be arranged at the pedal instead of at the push rod.

Optionally, the second spring seat comprises a smaller size than the spring seat. I.e., a diameter and/or cross-section of the second spring seat is smaller than the spring seat. This enables an efficient mechanical design of the push rod and of the through hole.

Optionally, the pedal unit is a clutch pedal unit, a brake pedal unit module and/or an integrated padel unit. Therein it is realized that the pedal unit may beneficially applied to clutch pedal units, brake pedal units and/or integrated padel units. Therein, each of the aforementioned pedal units may be provided with a restoring mechanism to restore the pedal against a pedal actuation. Therein, an integrated pedal unit may be a pedal unit which integrates functionalities of braking and shifting. For example, the pedal unit may be used for an automated manual transmission (AMT) system. Such an AMT system is particularly useful for utility vehicles to assist an operator and/or driver by actuation the transmission system.

According to an aspect of the disclosure, a housing for a pedal unit for a vehicle, in particular utility vehicle, is provided; wherein the housing comprises a pivot section adapted to rotatably pivot a pedal; the housing comprises a through hole adapted for a push rod projecting into and/or through the through hole; and the housing comprises a spring seat circumferentially arranged around the through hole and being adapted to support a compression spring for restoring the pedal against an actuation of the pedal. Optionally, the housing comprises one or more optional and/or preferred features according to the optional and preferred features of the pedal unit according to the disclosure to achieve a technical effect relating thereto.

According to an aspect of the disclosure, a vehicle, in particular utility vehicle, is provided, wherein the vehicle, in particular utility vehicle, comprises the pedal unit according to the disclosure. Optionally, the vehicle, in particular utility vehicle, and/or the pedal unit comprises one or more optional and/or preferred technical features of the pedal unit according to the disclosure to achieve a technical effect relating thereto.

The disclosure is hereinafter further described in detail with reference to the appended drawings, in which:
Fig. 1 shows a schematic of a vehicle, in particular utility vehicle, according to an aspect of the present disclosure;
Fig. 2 shows a perspective view of a pedal unit;
Fig. 3 shows a perspective view of a housing of a pedal unit;
Fig. 4 shows a perspective view of a housing of a pedal unit according to an embodiment of the disclosure;
Fig. 5 shows a detail of a housing of a pedal unit according to an embodiment of the disclosure;
Fig. 6 shows a detail of a pedal unit according to an embodiment of the disclosure; and
Fig. 7 shows alternatives of a pedal unit each according to an embodiment of the disclosure.

In the following embodiments are described with reference to the Figures, wherein the same reference signs are used for the same objects throughout the description of the Figures and wherein the embodiment is just one specific example for implementing the disclosure and does not limit the scope of the disclosure as defined by the claims.

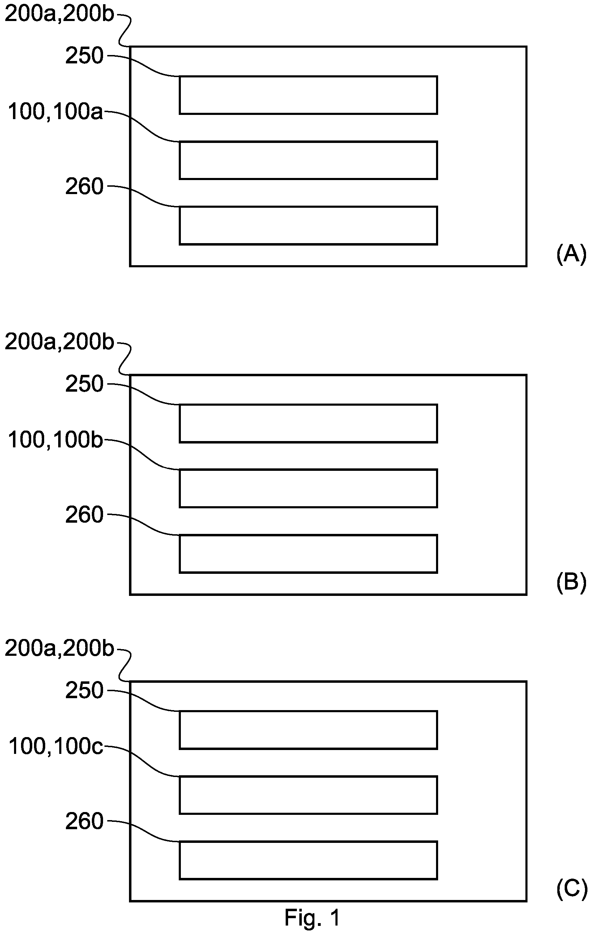

Figure 1 shows a schematic of a vehicle 200a, in particular utility vehicle 200b, according to an aspect of the present invention. In the following, the vehicle 200a, in particular utility vehicle 200b, is referred to as vehicle 200a, 200b. The vehicle 200a, 200b is a land vehicle. For example, the vehicle 200a, 200b is a truck and/or a bus. Figure 1 is divided in three sections (A), (B) and (C). Each of the sections (A), (B) and (C) illustrates an example of such a vehicle 200a, 200b.

The vehicle 200a, 200b in each of the sections (A), (B) and (C) comprises a transmission system 250 and a braking system 260.

The transmission system 250 is adapted to perform engaging and disengaging a clutch and/or to perform shifting. For example, the transmission system 250 is an automated manual transmission system 250. Therein, a pedal actuation may lead to an actuation of the clutch, in particular to a disengaging of the clutch.

The braking system 260 comprises hydraulically and/or pneumatically and optionally electric components. For example, braking system 260 is an electropneumatic braking system and a brake request, e.g., a pedal actuation, by a driver and/or operator of the vehicle 200a, 200b may lead to a brake signal that causes a pneumatic and/or an electro-pneumatic actuation of the braking system 250. Therein, pressurized air is provided and controlled to actuate the braking system 250 to brake the vehicle 200a, 200b.

Each of the transmission system 250 and the braking system 260 is actuatable by a pedal unit 100. The vehicle 100 comprises the pedal unit 100.

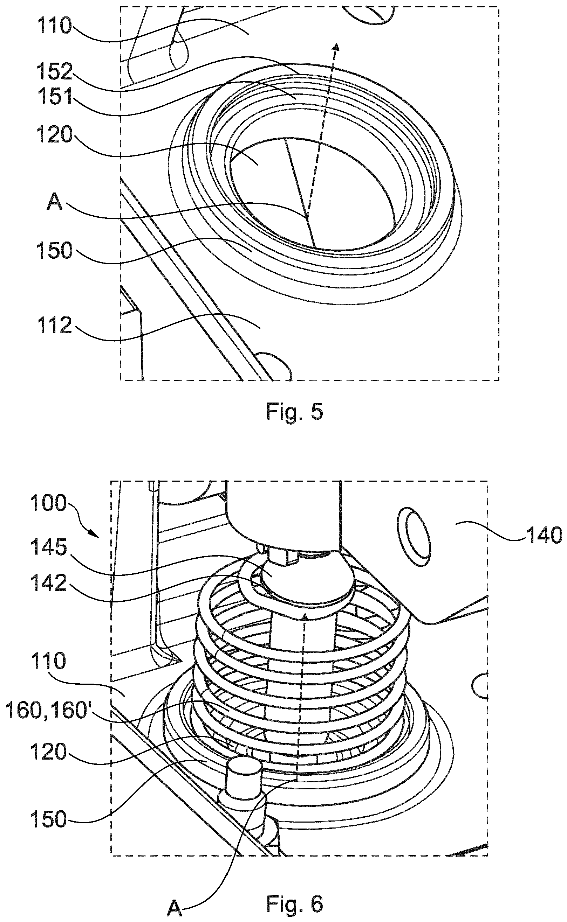

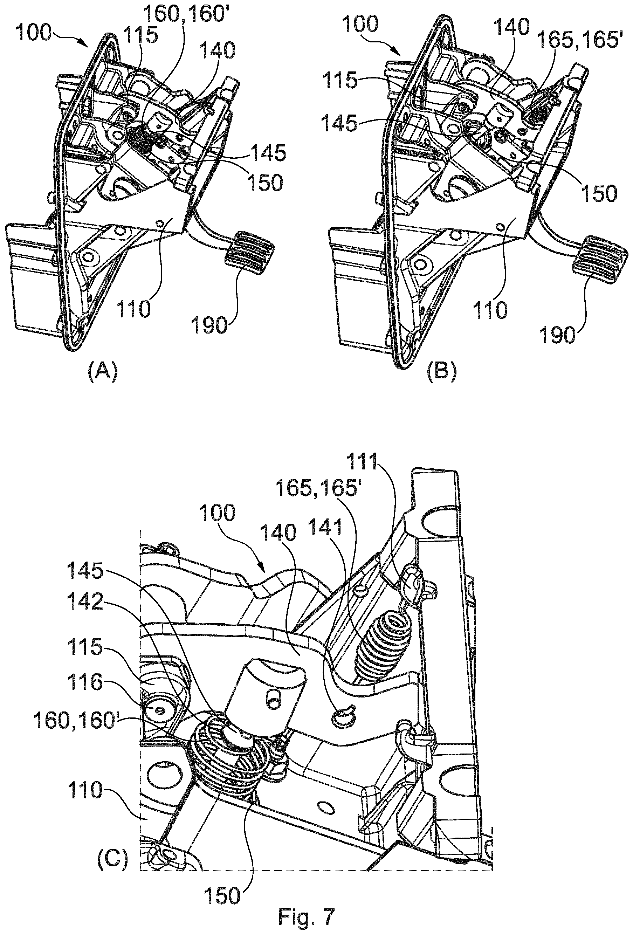

In section (A) the pedal unit 100 is configured as a clutch pedal unit 100a. The clutch pedal unit 100a comprises a pedal 140 (see Figures 6 and 7) to actuate the transmission system 250. In particular, a pedal actuation may lead to disengaging the clutch.

In section (B) the pedal unit 100 is configured as a brake pedal unit 100b. The brake pedal unit 100b comprises a pedal 140 (see Figures 6 and 7) to actuate the braking system 260. In particular, a pedal actuation may lead to a supply of pressurized air to a pneumatic brake to achieve a braking torque.

In section (C) the pedal unit 100 is configured as an integrated padel unit 100c. The integrated pedal unit 100c comprises a pedal 140 (see Figures 6 and 7) that combines brake, clutch and/or throttle functionality.

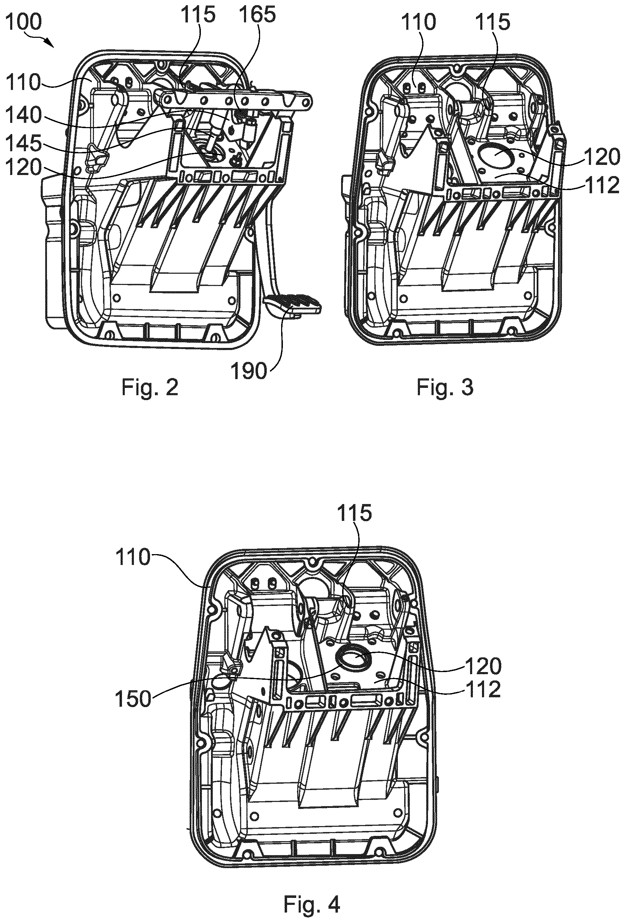

Figures 2 and 3 illustrates a pedal unit 100 according to the prior art and a housing 110 thereof. Figures 4 to 7 illustrates a pedal unit 100 according to the disclosure, a housing 110 thereof and further components thereof.

Figure 2 shows a perspective view of a pedal unit 100. The pedal unit 100 of Figure 2 is a pedal unit 100 for a vehicle 200a, in particular utility vehicle 200b.

The pedal unit 100 comprises a housing 110 with a pivot section 115 and a through hole 120.

The pedal unit 100 comprises a pedal 140 rotatably pivoted at the pivot section 115. The pedal 140 is adapted to be actuated. A pedal actuation is translated, by the pivot section 115, into a rotation. Due to the rotation, an extension spring 165 is extended and causes a restoring force against the rotation and thus against the pedal action.

The pedal unit 100 comprises a push rod 145. The push rod 145 is mechanically coupled to the pedal 140 and is adapted to be deflected by an actuation of the pedal 140. The push rod 145 is adapted to project into and/or through the through hole 120. I.e., the pedal actuation implies a deflection of the pushrod 145 into and/or through the through hole 120. The restoring force of the extension spring 165 is adapted to restore the position of the push rod 145 and deflection the pushrod 145 at least partially out of the through hole 120.

A driver (not shown) of the vehicle 200a, 200b may press on a pedal cover 190 to actuate the pedal 140.

Figure 3 shows a perspective view of a housing 110 of a pedal unit 100. The housing 110 of Figure 3 is the housing of the pedal unit 100 of Figure 2. Figure 3 is described under reference to Figure 2.

The through hole 120 is arranged at a plane surface section 112 of the housing 110. The plane surface section 112 is arranged essentially perpendicular to a longitudinal axis of the push rod 145.

Figure 4 shows a perspective view of a housing 110 of a pedal unit 100 according to an embodiment of the disclosure. The housing 110 of Figure 4 is a housing 110 of the pedal unit 100 for a vehicle 200a, 200b. Such a vehicle 200a, 200b and such a pedal unit 100 is described under reference to Figure 1. Figure 4 is described with reference to Figure 1.

The housing 110, also called body, of Figure 4 comprises a pivot section 115 adapted to rotatably pivot a pedal 140 (see Figures 6 and 7). The pivot section 115 is adapted to receive a bearing 116 (see Figure 7). The bearing 116 is adapted to enable a relative rotation between the housing 110 and the pedal 140. Thus, the bearing 116 and the pivot section 115 enable a rotation, i.e., a pivoting, of the pedal 140.

The housing 110 comprises a through hole 120. The housing comprises a plane surface section 112. The through hole 120 is arranged within the plane surface section 112. The through hole 120 is adapted, i.e., arranged and dimensioned, for a push rod 145 projecting into and/or through the through hole 120.

The housing 110 comprises a spring seat 150. The spring seat 150 is arranged in the plane surface section 112. In another embodiment (not shown), the spring seat 150 may be arranged in a non-plane, e.g., a curved surface section. The spring seat 150 of Figure 4 is circumferentially arranged around the through hole 120. I.e., the spring seat 120 is characterized by a diameter, a circumference and a cross-section that is larger than a diameter, a circumference and a cross-section of the through hole 120. The spring seat 120 is essentially annularly shaped. The spring seat 120 is adapted to support a compression spring 160 for restoring the pedal 140 against an actuation of the pedal 140 (see also Figures 5 and 6).

The spring seat 150 is integrally formed with the housing 110. The housing 110 and thus the spring seat 150 are, for example, made of metal, e.g., aluminum. Aluminum may enable an efficient manufacturing of the housing 110, enables to provide a lightweight and cost-effective housing 110. In another embodiment (not shown), the housing 110 may be made of other materials, e.g., plastics and/or other metals, and/or of a combination of several materials.

Figure 5 shows a detail of a housing 110 of a pedal unit 100 according to an embodiment of the disclosure. The housing 110 of Figure 5 is the housing 110 of Figure 4. Figure 5 is described under reference to Figures 1 and 4.

The detail of Figure 5 illustrates the spring seat 150. The spring seat 150 comprises an inner annular portion 151 and an outer annular portion 152. The inner annular portion 151 is arranged radially inwardly from the outer annular portion 152. Each of the inner annular portion 151 and the outer annular portion 152 is arranged radially outwardly from the through hole 120.

The outer annular portion 152 projects, along an axis A, from the plane surface section 112. The height, i.e., the extension along the axis A, of the outer annular portion 152 is larger than of the height of the inner annular portion 151. The inner annular portion 151 is arranged in alignment with the plane surface section 112. This achieves that a compression spring 160 (see Figure 6) may coaxially supported by the inner annular portion 151 and radially supported by the outer annular portion 152.

Figure 6 shows a detail of a pedal unit 100 according to an embodiment of the disclosure. The pedal unit 100 of Figure 6 is a pedal unit 100 for a vehicle 200a, 200b. Such a vehicle 200a, 200b and such a pedal unit 100 is described under reference to Figures 1, 4 and 5. Figure 6 is described with reference to Figures 1, 4 and 5.

The pedal unit 100 comprises the housing 110 of Figures 4 and 5. I.e., the housing 110 comprises the pivot section 115 (not shown in Figure 6) and the through hole 120.

The pedal unit 100 comprises a pedal 140 rotatably pivoted at the pivot section 115, and the pedal 140 is adapted to be actuated. An actuation of the pedal 140, i.e., a pedal actuation, lead to a rotational motion with respect the pivot section 115 and the bearing 116 (see Figure 7). Thus, the pedal 140 is adapted to function as a lever.

The pedal unit 100 comprises a push rod 145. Figure 5 illustrates an axis A. The axis A is a longitudinal axis of the push rod 145 and indicates a principal deflection direction of the push rod 145. The push rod 145 is mechanically coupled to the pedal 140 and is adapted to be deflected by an actuation of the pedal 140. Thus, a pedal actuation leads to a deflection and/or translation of the push rod 145 along the axis A.

The push rod 145 is adapted and in particular arranged to project into and/or through the through hole 120. Therein, a pedal actuation leads to a deflection of the push rod 145 into and/or through the through hole 120, in this Figure downwards.

The pedal unit 100 comprises the spring seat 150 as described with reference to Figures 3 and 4. The spring seat 150 is circumferentially arranged around the through hole 120 and is adapted to support a compression spring 160 for restoring the pedal 140 against an actuation of the pedal 140. The clutch pedal module 100 comprises the compression spring 160 for restoring the pedal 140 against an actuation of the pedal 140. I.e., the pedal actuation leads to a compression of the compression spring 160. The compression of the compression spring 160 leads to a restoring force along the axis A and against the pedal actuation. Therein, the restoring force leads to a force to deflect the push rod 145 out of the through hole 120, in this Figure upwards.

The compression spring 160 is supported at one end on the spring seat 150 and on another end at the push rod 145. Thus, the restoring force is directly built up between the spring seat 150 and the push rod 145 and thus exerted between the spring seat 150 and the push rod 145.

The push rod 145 comprises a second spring seat 142 for supporting the compression spring 160. The second spring seat 142 may be realized by a frustoconical shape of an end of the push rod 145, wherein a plane surface section of the push rod 145 is adapted to support the compression spring 160. The second spring seat 142 is rotationally symmetric. The second spring seat 142 comprises a smaller size than the spring seat 150. I.e., second spring seat 142 comprises a diameter, a circumference and a cross-section that is smaller than a diameter, a circumference and a cross-section of the spring seat 150.

Figure 7 shows alternatives of a pedal unit 100 each according to an embodiment of the disclosure. Therein, Figure 7 is divided into three sections (A), (B) and (C). Each of the sections (A), (B) and (C) illustrates the pedal unit 100 with a housing 110 according to the disclosure. Figure 7 is described under reference to Figures 1 and 4 to 6. The pedal units 100 of the sections (A), (B) and (C) of Figure 7 differ from each other in their equipment with springs 160, 165.

In section (A), the pedal unit 100 is the pedal unit 100 as shown in Figure 6. The pedal unit 100 comprises the compression spring 160. A driver (not shown) of the vehicle 200a, 200b may press on a pedal cover 190 to actuate the pedal 140.

In section (B), the compression spring 160 is dispensed with. Each of the housing 110 and the pedal 140 is adapted to provide a mounting section 111, 141 for mounting an extension spring 165 for restoring the pedal 140 against an actuation of the pedal 140. Therein, the mounting section 111, 141 may be configures as through holes, projections and/or hooks (see in detail section (C)). The pedal unit 100 comprises the extension spring 165 for restoring the pedal 140 against an actuation of the pedal 140. The extension spring 165 is supported at the mounting sections 111, 141. The spring seat 150 is arranged between the pivot section 115 and the mounting sections 111, 141. I.e., along the pedal 140 and/or its lever, the spring seat 150 is centrally arranged.

In section (C), the pedal unit 100 comprises the compression spring 160 and the extension spring 165. I.e., the pedal unit 100 comprises the compression spring 160 as shown in section (A) and the extension spring 165 as shown in section (B). Therein, the mounting section 111 of the housing 110 is a hook and the mounting section 141 of the pedal 140 is a through-hole. A pedal actuation leads to an extension of the extension spring 165, i.e., to a motion of the mounting section 141 of the pedal 140 in this Figure downwards, and thus to a restoring force, in this Figure upwards.

In each of the embodiments, the compression spring 160 is a coil spring 160' and the extension spring 165 is a coil spring 165'.

The pedal unit 100 is to be able to interchangeably install two types of springs 160, 165, namely the compression spring 160 and/or the extension spring 165 in pedal unit 100, depending on the requirements on the pedal 100. This achieves an ease of implementation of various ergonomics depending on the customer's needs, a short time implementation of variants of the pedal unit 100, a space reduction, i.e., improved usage of construction space and/or a possibility to change the ergonomics by replacing the spring 160, 165, e.g., at an authorized service and/or for maintenance.

### List of reference signs (Part of the description)

- 100: pedal unit
- 100a: clutch pedal unit
- 100b: brake pedal unit
- 100c: integrated pedal unit
- 110: housing
- 111: mounting section
- 112: plane surface section
- 115: pivot section
- 116: bearing
- 120: through hole
- 140: pedal
- 141: mounting section
- 142: second spring seat
- 145: push rod
- 150: spring seat
- 151: inner annular portion
- 152: outer annular portion

- 160: compression spring
- 160': coil spring
- 165: retracting spring
- 165': coil spring

- 190: pedal cover

- 200a: vehicle
- 200b: utility vehicle

- 250: transmission system
- 260: braking system

- A: axis

## Claims

1. Pedal unit (100) for a vehicle (200a), in particular utility vehicle (200b); wherein
- the pedal unit (100) comprises a housing (110) with a pivot section (115) and a through hole (120);
- the pedal unit (100) comprises a pedal (140) rotatably pivoted at the pivot section (115), and the pedal (140) is adapted to be actuated;
- the pedal unit (100) comprises a push rod (145); the push rod (145) is mechanically coupled to the pedal (140) and is adapted to be deflected by an actuation of the pedal (140); and the push rod (145) is adapted to project into and/or through the through hole (120); and
- the pedal unit (100) comprises a spring seat (150) circumferentially arranged around the through hole (120) and being adapted to support a compression spring (160) for restoring the pedal (140) against an actuation of the pedal (140).

2. Pedal unit (100) as claimed in claim 1, wherein
- the spring seat (150) is integrally formed with the housing (110).

3. Pedal unit (100) as claimed in claim 1 or 2, wherein
- the clutch pedal module (100) comprises a compression spring (160) for restoring the pedal (140) against an actuation of the pedal (140); and
- the compression spring (160) is supported at one end on the spring seat (150) and on another end at the push rod (145).

4. Pedal unit (100) as claimed in any one of the preceding claims, wherein
- the compression spring (160) is a coil spring (160').

5. Pedal unit (100) as claimed in any one of the preceding claims, wherein
- each of the housing (110) and the pedal (140) is adapted to provide a mounting section (111, 141) for mounting an extension spring (165) for restoring the pedal (140) against an actuation of the pedal (140).

6. Pedal unit (100) as claimed in claim 5, wherein
- the pedal unit (100) comprises an extension spring (165) for restoring the pedal (140) against an actuation of the pedal (140); and
- the extension spring (165) is supported at the mounting sections (111, 141).

7. Pedal unit (100) as claimed in claim 5 or 6, wherein
- the spring seat (150) is arranged between the pivot section (115) and the mounting sections (111, 141).

8. Pedal unit (100) as claimed in any one of claims 5 to 7, wherein
- the extension spring (165) is a coil spring (165').

9. Pedal unit (100) as claimed in any one of the preceding claims, wherein
- the push rod (145) and/or the pedal (140) comprises a second spring seat (142) for supporting the compression spring (160).

10. Pedal unit (100) as claimed in claim 9, wherein
- the second spring seat (142) comprises a smaller size than the spring seat (150).

11. Pedal unit (100) as claimed in any one of the preceding claims, wherein
- the pedal unit (100) is a clutch pedal unit (100a), a brake pedal unit (100b) and/or an integrated padel unit (100c).

12. Housing (110) for a pedal unit (100) for a vehicle (200a), in particular utility vehicle (200b); wherein
- the housing (110) comprises a pivot section (115) adapted to rotatably pivot a pedal (140);
- the housing (110) comprises a through hole (120) adapted for a push rod (145) projecting into and/or through the through hole (120); and
- the housing (110) comprises a spring seat (150) circumferentially arranged around the through hole (120) and being adapted to support a compression spring (160) for restoring the pedal (140) against an actuation of the pedal (140).

13. Vehicle (200a), in particular utility vehicle (200b), comprising the pedal unit (100) as claimed in any of claims 1 to 11 and/or the housing (110) as claimed in claim 12.
